Europäisches Patentamt

European Patent Office    (11) Numéro de publication : **0 029 387**

Office européen des brevets    **B1**

(19)

(12)    # FASCICULE DE BREVET EUROPÉEN

(45) Date de publication du fascicule du brevet :
**11.04.84**

(51) Int. Cl.³ : **E 03 C   1/10**

(21) Numéro de dépôt : **80401610.3**

(22) Date de dépôt : **12.11.80**

(54) **Disconnecteur pour canalisation d'eau potable.**

(30) Priorité : **12.11.79 FR 7927779**

(43) Date de publication de la demande :
**27.05.81 Bulletin 81/21**

(45) Mention de la délivrance du brevet :
**11.04.84 Bulletin 84/15**

(84) Etats contractants désignés :
**AT BE CH DE GB IT LI LU NL SE**

(56) Documents cités :
**DE-A- 2 759 174**
**FR-A- 1 550 782**
**US-A- 3 171 423**

(73) Titulaire : **Anciens Etablissements M. FRISQUET, SA**
**Rue Branly Z.I. Beauval**
**F-77100 Meaux (FR)**

(72) Inventeur : **Frisquet, Maurice**
**54, rue Gambetta**
**F-77450 Esbly (FR)**

(74) Mandataire : **Roger-Petit, Jean-Camille et al**
**OFFICE BLETRY 2, Boulevard de Strasbourg**
**F-75010 Paris (FR)**

EP 0 029 387 B1

## Disconnecteur pour canalisation d'eau potable

Les disconnecteurs sont des petits appareils intercalés dans les canalisations d'eau potable pour éviter qu'en cas de chute de pression amont, pour une raison quelconque, l'eau qui est en aval, et peut être considérée comme polluée, puisse refouler vers l'amont au-delà du disconnecteur.

Il existe de tels appareils comportant des membranes et des clapets mais ils n'ont pas toujours la fiabilité désirée en raison des aléas dus aux membranes, et à l'étanchéité pas toujours parfaite des clapets.

On connaît également (voir DE-A-2 759 174) un appareil n'ayant ni membrane ni soufflet et comportant une entrée amont et une sortie aval alignées, un corps central cylindrique ayant une sortie d'évacuation vers l'égout des eaux de refoulement, et un piston creux, que doit traverser l'eau potable pour aller de l'entrée à la sortie du corps creux, ledit piston étant susceptible de coulisser axialement dans le corps creux entre deux butées extrêmes, dans un sens sous l'action de la pression amont et dans l'autre sous l'action d'un ressort antagoniste s'ajoutant à la pression aval.

Dans cet appareil des clapets annexes commandent l'action du corps central cylindrique dont les deux extrémités sont toujours ouvertes ; il n'a du reste pas de fonction active et constitue une liaison creuse ; au cas où une impureté contenue dans l'eau lui fait perdre son étanchéité, il n'assure pas le résultat désiré quand les pressions sont faibles.

Pour éviter les inconvénients des disconnecteurs connus antérieurement, celui suivant la présente invention comportant une entrée amont et une sortie aval alignées, un corps creux central cylindrique, ayant une sortie d'évacuation vers l'égout des eaux de refoulement, et un piston creux, que doit traverser l'eau potable pour aller de l'entrée à la sortie du corps creux, ledit piston étant susceptible de coulisser axialement dans le corps creux, entre deux butées extrêmes, dans un sens sous l'action de la pression amont, et dans l'autre sous celle d'un ressort antagoniste, s'ajoutant à la pression aval, est caractérisé en ce que l'entrée amont, le corps creux et la sortie aval sont alignés, et en ce que ce piston creux est fermé à ses deux extrémités et comporte dans sa paroi cylindrique des ouvertures amont permettant à l'eau arrivant de l'amont de pénétrer dans le piston creux, et des ouvertures aval permettant à cette eau de sortir du piston creux pour arriver à la sortie du disconnecteur, en cas de fonctionnement normal, en combinaison avec des joints circulaires à lèvres appliquées sur la surface cylindrique extérieure du piston creux, empêchant la pénétration de l'eau venant de l'amont, dans ce piston creux, ainsi que celle de l'eau refoulée, en cas de surpression aval, tout en permettant aux fuites d'eau refoulée d'être évacuées vers l'égout.

Le dessin annexé montre à titre d'exemple un mode de réalisation de la présente invention.

Les figures 1 et 2 sont des vues en coupe montrant respectivement le piston creux dans ces deux positions extrêmes, en cas de fonctionnement normal pour l'une, et en cas de surpression aval, pour l'autre.

La figure 3 est une vue analogue montrant le piston dans une position intermédiaire.

Le disconnecteur représenté comporte un corps creux cylindrique 1, avec une entrée amont 2 pour l'eau potable, et une sortie aval 3 ; le corps creux 1 a été représenté en deux pièces, sa partie aval 4 étant fixée à sa partie amont par des boulons 5.

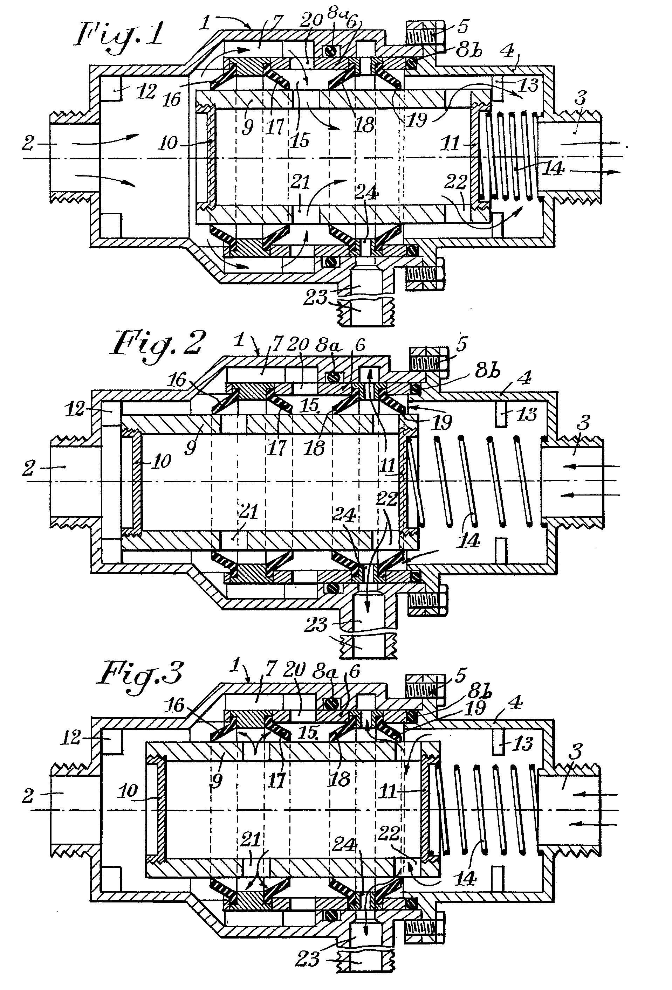

Dans ce corps creux est fixé un cylindre intermédiaire 6 laissant entre eux un espace vide annulaire 7, ouvert du côté amont et fermé du côté aval, avec deux joints toriques d'étanchéité 8a et 8b ; un piston creux axial 9, fermé à ses extrémités amont 10 et aval 11 peut coulisser entre deux positions extrêmes, limitées respectivement par une butée amont 12 et une butée aval 13, soit de la gauche vers la droite de la figure, en fontionnement normal, lorsque la pression amont est supérieure à la pression aval, comme représenté à la figure 1, soit en direction inverse, lorsque la pression aval, aidée par celle du ressort antagoniste 14, devient supérieure à la pression amont, comme montré à la figure 2.

Le piston creux 9 est séparé du cylindre 6 par une zone annulaire libre 15, dans laquelle il est maintenu par quatre joints circulaires, fixés dans le cylindre auxiliaire 6, et dont les lèvres 16, 17, 18 et 19 frottent contre sa paroi extérieure ; les lèvres de ces joints sont inclinées alternativement vers l'amont, vers l'aval, à nouveau vers l'amont, et enfin vers l'aval.

Le cylindre auxiliaire 6 est percé de l'orifice 20, débouchant dans l'espace creux 15, compris entre lui, le piston creux 9 et les joints à lèvres 17 et 18.

Le piston 9 est percé d'un orifice amont 21 et d'un orifice aval 22, qui en position de fonctionnement normal, se trouvent respectivement entre les joints 17 et 18, et en aval du joint 19, comme le montre la figure 1, et, en position de refoulement, respectivement entre les joints 16 et 17, et entre les joints 18 et 19, comme le montre la figure 2.

En fonctionnement normal, lorsque la pression amont est supérieure à la pression aval et que tous les organes du disconnecteur se trouvent dans la position représentée à la figure 1, l'eau arrivant de l'amont pénètre dans le disconnecteur à travers son entrée 2, passe dans l'espace libre 7 entre le cylindre auxiliaire 6 et le corps creux 1, traverse les orifices 20 du cylindre auxiliaire, et 21 du piston creux, pour pénétrer dans ce dernier, dont il ressort à travers son orifice aval 22 pour arriver à la sortie 3 du disconnecteur. La perte de charge est minimale.

Par contre, en cas de refoulement, les organes étant alors dans la position représentée à la figure 2, l'eau venant de l'amont ne peut pénétrer dans le corps creux et est isolée de l'aval par les joints 16, 17 et 18, et sa pression tend à appliquer leurs lèvres contre la paroi extérieure du cylindre creux 9 ; les eaux polluées refoulées sont bloquées à l'aval par le joint 19 dont elle tend à appliquer la lèvre contre la paroi extérieure du piston creux 6, et les fuites qui pourraient passer sous cette lèvre sont évacuées à travers l'orifice 22 aval du piston creux 6 en direction de l'égout, par l'orifice d'évacuation des eaux polluées 23 dans lequel elles peuvent arriver après avoir traversé l'ouverture 24 prévue à cet effet dans le cylindre auxiliaire 6, entre les deux joints 18 et 19.

Lorsque le piston creux 9 est dans une position intermédiaire, comme montré à la figure 3, l'eau amont est toujours isolée dans la partie amont de l'appareil, comme dans le cas de la figure 2, par les trois joints à lèvres 16, 17 et 18, dont les deux premiers empêchent la pénétration dans le piston creux 9 à travers son orifice amont 21, et le troisième 18 bloque son passage vers l'aval.

Par contre, les eaux polluées refoulées ne sont pas encore empêchées par le joint à lèvres 19, de pénétrer, à travers l'orifice aval 22 du piston creux 9, à l'intérieur de celui-ci mais elles vont directement vers l'orifice d'évacuation à l'égout 23, en passant sous la lèvre du joint à lèvre 19 et à travers l'orifice 24 du cylindre auxiliaire 9.

Il est bien entendu que le mode de réalisation qui a été décrit en référence au dessin annexé a été donné à titre purement indicatif et nullement limitatif et que de nombreuses modifications peuvent être apportées sans qu'on s'écarte pour cela du cadre de la présente invention tel que défini par les revendications.

## Revendications

1. Disconnecteur pour canalisation d'eau potable comportant une entrée amont (2) et une sortie aval (3) alignées, un corps creux central (1), cylindrique, ayant une sortie d'évacuation (23) vers l'égout des eaux de refoulement, et un piston creux (9) que doit traverser l'eau potable pour aller de l'entrée à la sortie du corps creux, ledit piston étant susceptible de coulisser axialement dans le corps creux, entre deux butées extrêmes (12, 13), dans un sens sous l'action de la pression amont, et dans l'autre sous celle d'un ressort antagoniste (14), s'ajoutant à la pression aval, caractérisé en ce que l'entrée amont (2), le corps creux (1) et la sortie aval (3) sont alignés, et en ce que ce piston creux est fermé à ses deux extrémités et comporte dans sa paroi cylindrique des ouvertures amont (21) permettant à l'eau arrivant de l'amont (2) de pénétrer dans le piston creux (9), et des ouvertures aval (22) permettant à cette eau de sortir du piston creux pour arriver à la sortie (3) du disconnecteur, en cas de fonctionnement normal, en combinaison avec des joints circulaires à lèvres (16 à 19) appliquées sur la surface cylindrique extérieure du piston creux, empêchant la pénétration de l'eau venant de l'amont, dans ce piston creux, ainsi que celle de l'eau refoulée, en cas de surpression aval, tout en permettant aux fuites d'eau refoulée d'être évacuées vers l'égout.

2. Disconnecteur suivant la revendication 1, caractérisé en ce que, dans le corps creux (1) est fixé un cylindre intermédiaire (6) laissant entre eux un espace vide annulaire (7), ouvert du côté amont et fermé du côté aval, et le piston creux axial (9) peut coulisser entre deux positions extrêmes, limitées respectivement par la butée amont (12) et la butée aval (13), soit de l'amont à l'aval, en fonctionnement normal, lorsque la pression amont est supérieure à la pression aval, soit en direction inverse, lorsque la pression aval, aidée par celle du ressort antagoniste (14), devient supérieure à la pression amont.

3. Disconnecteur suivant la revendication 2, caractérisé en ce que le piston creux (9) est séparé du cylindre (6) par une zone annulaire libre (15), dans laquelle il est maintenu par quatre joints circulaires, fixés dans le cylindre auxiliaire (6), et dont les lèvres (16, 17, 18 et 19) frottent contre sa paroi extérieure.

4. Disconnecteur suivant la revendication 3, caractérisé en ce que les lèvres de ces joints sont inclinées alternativement vers l'amont, vers l'aval, à nouveau vers l'amont, et enfin vers l'aval.

5. Disconnecteur suivant la revendication 3, caractérisé en ce que le cylindre auxiliaire (6) est percé d'un orifice (20), débouchant dans l'espace creux (15), compris entre lui, le piston creux (9) et les deuxième et troisième joints à lèvres (17 et 18), et les ouvertures amont (21) et les ouvertures aval (22) se trouvent respectivement en position de fonctionnement normal, entre les deuxième et troisième joints (17 et 18), et en aval du quatrième joint (19), et, en position de refoulement, respectivement entre les premier et deuxième joints (16 et 17), et entre les troisième et quatrième joints (18 et 19).

## Claims

1. A disconnector for a drinking-water piping system comprising an upstream inlet (2) and a downstream outlet (3) which are aligned, a central hollow body (1) which is cylindrical, having an outlet (23) for draining away the discharged water towards the drains, and a hollow piston (9) which the drinking water has to traverse in order to pass from the inlet to the outlet of the hollow body, the said piston being capable of sliding axially in the hollow body, between two end stops (12, 13) in one direction under the action of the upstream pressure and in the other direction under the action of a counter-spring (14) in addition to the downstream pressure, characterized in that the upstream inlet (2), the hollow body (1) and the downstream outlet (3) are aligned, and in that this hollow piston is closed at its two ends and has, in its cylindrical wall, upstream openings (21) which allow the water arriving from upstream (2) to penetrate the hollow piston (9), and downstream openings (22) which allow this water to leave the hollow piston so as to reach the outlet (3) of the disconnector, in the case of normal functioning, in combination with circular seals with rims (16 to 19) applied on the outer cylindrical surface of the hollow piston, preventing penetration of the water coming from upstream, into this hollow piston, as well as penetration of the discharged water, in the case of downstream overpressure, whilst allowing leakage of the discharged water to be drained off towards the drains.

2. A disconnector according to claim 1, characterized in that in the hollow body (1) there is fixed an intermediate cylinder (6) leaving an annular empty space (7), which is open on the upstream side and closed on the downstream side, between the hollow body and the intermediate cylinder and the hollow axial piston (9) can slide between the two end positions, which are limited by the upstream stop (12) and the downstream stop (13) respectively, either from upstream to downstream during normal functioning when the upstream pressure is greater than the downstream pressure, or in the inverse direction when the downstream pressure, assisted by that of the counter-spring (14), becomes greater than the upstream pressure.

3. A disconnector according to claim 2, characterized in that the hollow piston (9) is separated from the cylinder (6) by a free annular area (15), in which the piston is held by four circular seals which are fixed in the auxiliary cylinder (6), and the rims (16, 17, 18 and 19) of which rub against its external wall.

4. A disconnector according to claim 3, characterized in that the rims of these seals are inclined alternately upstream, downstream, upstream again and finally downstream.

5. A disconnector according to claim 3, characterized in that the auxiliary cylinder (6) is provided with an orifice (20), opening into the hollow space (15) between the latter, the hollow piston (9) and the second and third seals with rims (17 and 18), and the upstream openings (21) and the downstream openings (22) are situated respectively, in the normal functioning position, between the second and third seals (17 and 18), and downstream of the fourth seal (19), and, in the discharge position, between the first and second seals (16 and 17), and between the third and fourth seals (18 and 19) respectively.

**Ansprüche**

1. Rückflußverhinderer für Trinkwasserleitung mit einem zustromseitigen Einlaß (2) und einem abstromseitigen Auslaß (3), die miteinander fluchten, einem zylindrischen zentralen Hohlkörper (1) mit einem Entleerungsauslaß (23) zum Ablauf für Rückstauwasser, und einem Hohlkolben (9), den das Trinkwasser auf seinem Weg vom Einlaß zum Auslaß des Hohlkörpers durchströmen muß und der in dem Hohlkörper zwischen zwei Endanschlägen (12, 13) axial verschiebbar ist, in der einen Richtung unter der Wirkung des zustromseitigen Drucks und in der anderen Richtung unter der Wirkung einer Rückstellfeder (14) zusätzlich zum abstromseitigen Druck, dadurch gekennzeichnet, daß der zustromseitige Einlaß (2), der Hohlkörper (1) und der abstromseitige Auslaß (3) zueinander koaxial ausgerichtet sind, und daß der Hohlkolben an seinen beiden Enden geschlossen ist und in seiner Zylinderwand zustromseitige Öffnungen (21) und abstromseitige Öffnungen (22) aufweist, durch die im Normalbetrieb das zustromseitig ankommende Wasser in den Hohlkolben (9) eintreten bzw. aus dem Hohlkolben austreten und zum Auslaß (3) des Rückflußverhinderers gelangen kann, in Kombination mit kreisförmigen Lippendichtungen (16-19), die auf der zylindrischen Außenfläche des Hohlkolbens aufsitzen, und die bei abstromseitigem Überdruck den Eintritt des zustromseitig ankommenden Wassers sowie des Rückstauwassers in den Hohlkolben verhindern, jedoch den Abzug der Leckstrommengen an Rückstauwasser zum Abwasserablauf ermöglichen.

2. Rückflußverhinderer nach Anspruch 1, dadurch gekennzeichnet, daß in dem Hohlkörper (1) ein Zwischenzylinder (6) befestigt ist, derart, daß zwischen beiden ein freier Ringraum (7) verbleibt, der zustromseitig offen und abstromseitig geschlossen ist, und daß der axiale Hohlkolben (9) zwischen zwei von dem zustromseitigen Anschlag (12) bzw. dem abstromseitigen Anschlag (13) begrenzten Endstellungen verschiebbar ist, und zwar entweder im Normalbetrieb von der Zustrom- zur Abstromseite, wenn der zustromseitige Druck größer als der abstromseitige Druck ist, oder in entgegengesetzter Richtung, wenn der von der Kraft der Rückstellfeder (14) unterstützte abstromseitige Druck größer als der zustromseitige Druck wird.

3. Rückflußverhinderer nach Anspruch 2, dadurch gekennzeichnet, daß der Hohlkolben (9) vom Zylinder (6) durch eine freie ringförmige Zone (15) getrennt ist, in welcher er durch vier kreisförmige Dichtungen gehalten ist, die in dem Hilfszylinder (6) befestigt sind und deren Lippen (16, 17, 18, 19) gegen seine Außenwand reibend anliegt.

4. Rückflußverhinderer nach Anspruch 3, dadurch gekennzeichnet, daß die Lippen dieser Dichtungen abwechselnd zur Zustromseite, zur Abstromseite, wieder zur Zustromseite und schließlich zur Abstromseite hin geneigt sind.

5. Rückflußverhinderer nach Anspruch 3, dadurch gekennzeichnet, daß der Hilfszylinder (6) durch eine Öffnung (20) unterbrochen ist, die in den hohlen Raum (15) zwischen ihm, dem Hohlkolben (9) und der zweiten und dritten Lippendichtung (17, 18) eingeschlossen ist, und daß die zustromseitigen Öffnungen (21) und die abstromseitigen Öffnungen (22) sich im Normalbetrieb zwischen der zweiten und dritten Dichtung (17 und 18) bzw. abstromseitig von der vierten Dichtung (19) und in der Rückstaustellung zwischen der ersten und der zweiten Dichtung (16 und 17) bzw. zwischen der dritten und vierten Dichtung (18 und 19) befinden.

0 029 387

Fig.1

Fig.2

Fig.3

1